# EUROPEAN PATENT SPECIFICATION

(11) **EP 1 521 113 B1**
(45) Date of publication and mention of the grant of the patent: **26.11.2008**
(21) Application number: 03733283.0
(22) Date of filing: 03.06.2003
(51) Int. Cl.: G02F 1/1333, G02F 1/13357

(54) **LIQUID CRYSTAL DISPLAY DEVICE**
FLÜSSIGKRISTALL-ANZEIGEVORRICHTUNG
DISPOSITIF D'AFFICHAGE A CRISTAUX LIQUIDES

(30) Priority: 19.06.2002 JP 2002178703
(43) Date of publication of application: 06.04.2005
(73) Proprietor: Sharp Kabushiki Kaisha, Osaka-shi, Osaka-fu 545-0013 (JP)
(72) Inventor: NAKAYAMA, Mitsuo, Shioya-gun, Tochigi 329-1233 (JP)
(74) Representative: Müller - Hoffmann & Partner
(86) International application number: PCT/JP2003/007054
(87) International publication number: WO 2004/001492

(56) References cited:
- JP-A- 11 052 140
- JP-A- 2002 083 512
- JP-A- 2002 149 083
- JP-A- 2002 268 063
- US-A1- 2001 003 471
- US-A1- 2002 008 804
- US-A1- 2002 041 268
- US-A1- 2002 044 437
- US-B1- 6 219 116
- US-B1- 6 426 784
- PATENT ABSTRACTS OF JAPAN vol. 2000, no. 20, 10 July 2001 (2001-07-10) -& JP 2001 075096 A (SAMSUNG ELECTRONICS CO LTD), 23 March 2001 (2001-03-23) -& US 6 580 477 B1 (CHO CHUN-HYUN) 17 June 2003 (2003-06-17)

## Description

### Technical Field

The present invention relates to a direct backlight-type liquid crystal display device in accordance with the pre-characterizing part of claim 1. A direct backlight type liquid crystal display device of that kind is known from US 2002/044437 A1.

### Background of the Invention

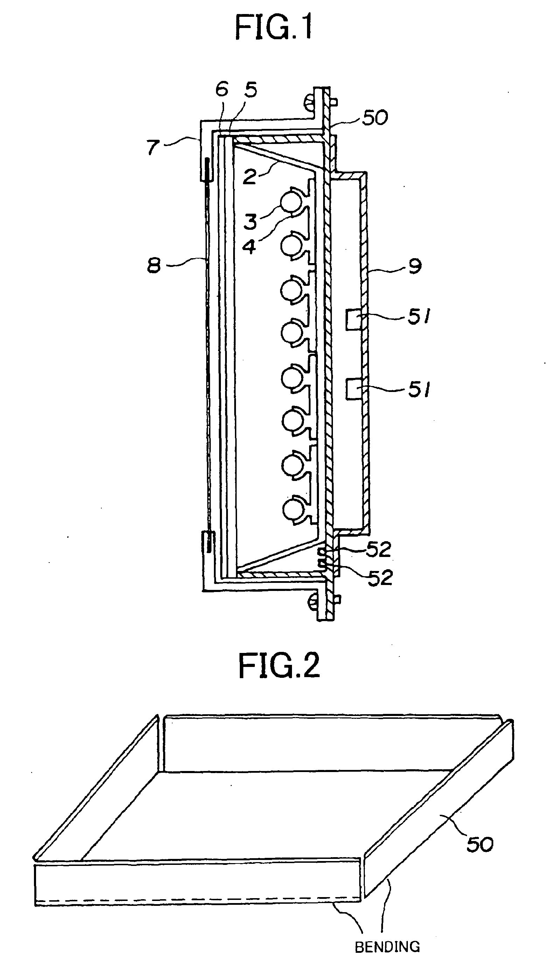

Fig. 1 shows the structure of the side section of a main part in one example of a conventional liquid crystal display device. The liquid crystal display device shown in Fig. 1 comprises a liquid crystal panel 8 which is secured to a panel frame 7. The panel frame 7 is mounted on a chassis 50 made of a steel plate by means of screws. The liquid crystal panel 8 and chassis 50 constitute an outer structure of the liquid crystal display device from which a cabinet case (not shown) is removed. A plurality of direct backlight lamps 3 are mounted on lamp holders 4 on the rear side of the liquid crystal panel 8. The lamps 3 are spaced from each other in a vertical direction.

A diffusion plate 5 and a polarization reflection film 6 are disposed between the liquid crystal panel 8 and the lamps 3 to provide the liquid crystal panel 8 with uniform and increased brightness. A reflection plate 2 for reflecting light emitted from the lamps 3 is disposed on the rear side of the lamps 3. The reflection plate 2 is secured to the chassis 50 of a steel plate.

The chassis 50 is integrally provided on its rear side with a center angle 9. The center angle 9 is provided with wall mount fitting mounting screws portions 51 which enable the liquid crystal display device to be mounted on the wall. The chassis 50 is provided on its lower portion with desk-top stand mounting screws portions 52 which enable the liquid crystal display device to be mounted on a desk-top stand (not shown).

Fig. 2 is a perspective view showing an exemplary conventional chassis of a steel plate. The chassis 50 comprises an outer frame having four sides which are bent and a portion excepting the outer frame, which is made of a thin plate in the flat form. Although the chassis 50 made of a steel plate can be made into a thin plate in a manufacturing process in order to reduce the weight of the liquid crystal display device, the overall weight of the liquid crystal display device inevitably becomes large due to a high proportion of the steel plate to the entire of the liquid crystal display device, so that the rigidity of the chassis of a steel plate having the bent outer frame is lower than that of the chassis having integrally formed outer frame.

Japanese Laid-Open Patent Publication No. H02-93425 discloses a liquid crystal display device in which liquid crystal cells are sandwiched between upper and lower frames so that elastic members are disposed between the liquid crystal cells and the frames have enough rigidity against external impact and the frames are of a die-cast chassis structure which is in the hollow frame shape.

Japanese Laid-Open Patent Publication No. H08-16114 discloses a liquid crystal display structure in which a board having chip-type LED elements which are juxtaposed at an equal pitch on one side thereof and light driving circuit components are mounted on the opposite side thereof is secured to a die-cast chassis by means of screws. The die-cast chassis comprises upper and lower flat outer frames and two vertical link members which link the upper frame with the lower frame. The chassis is hollow in the center thereof.

Adoption of the liquid crystal display device as the video image display means has recently been increased in all fields since it is more excellent in the vividness of color display than other display devices. An increase in size of the display screen has been demanded as its application has been increased. Reduction in overall weight of the display device has been demanded and prevention of lowering of the rigidity due to the increase in its size has been required as the size of the liquid crystal display device increases.

Since achievement of the above-mentioned reduction in weight and increase in rigidity is mainly determined by the structure of the chassis, the reduction in weight and increase in rigidity by optimization of the structure of the chassis has attracted attention. In the direct backlight-type, it is necessary to assure the reflection efficiency by disposing a reflection plate having an area which is equal to that where the lamps are disposed on the chassis, so that attention must be directed toward the relation and connection of the integral structure between the chassis and the reflection plate.

The conventional chassis 50 which is shown in Figs. 1 and 2 is used for small size liquid crystal display device. If the liquid crystal display device becomes larger, overall weight of the display device becomes larger since the chassis 50 is made of a steel plate and there is the fear that the rigidity of the whole of the chassis 50 will be weakened due to the bent shape of the outer frame. In other words, the above-mentioned chassis is not contemplated to achieve reduction in weight and increase in rigidity when it is applied to the large size liquid crystal display device.

Since the chassis structure of the above-mentioned Japanese Laid-Open Patent Publication No. H02-93425 comprises a lower frame for supporting liquid crystal cells, which is manufactured by the metal die-casting, the rigidity is assured. However, it has a problem in the reliability of the securing and supporting of the backlight and reflection plate since only the outer frame in the frame shape having a constant thickness and the lower frame is hollow in the center thereof.

Since the chassis of the above-mentioned Japanese Laid-Open Patent Publication No. H08-16114 is a die-cast chassis which is contemplated to reduce its weight for supporting chip-type LED elements, it does not have any structure in which the four sides of the chassis are reinforced by an outer frame and is not considered for assuring the rigidity. Since an object to be supported on the chassis is LED elements, the Japanese Laid-Open Patent Publication No. H08-16114 does not of course refer to the relationship between the space in which the reflection plate and the direct backlight lamps which are essential for the liquid crystal display device and the chassis structure.

The direct backlight type liquid crystal device known from US 2002/0044437 Al includes a mold frame for supporting respective elements of a back light assembly and fixes a liquid crystal display panel and circuit parts. But this document never suggests die-casting of the mold frame which corresponds to a flat-bottomed plastic frame formed by injection molding or to a band chassis made of a steel plate of the prior art described immediately before. JP 2001-75096 A (corresponding to the later published US-B1-6,580,477) discloses a liquid crystal display comprising a group of light supplying units composed of two or more units combined with each other each consisting of a light guide plate and a light source and capable of avoiding non uniformity of luminance in a screen of 14 inches or more. However, this device has an arrangement of a plurality of side-edge type backlight units. Therefore the guide plate itself is rigid and the frame is not required to be rigid. In other words, the device known from the last mentioned document has no need for conducting die casting of the frame.

The present invention was made to overcome the above-mentioned problems. It is an object of the present invention to provide a chassis structure which achieves reduction in weight and increase in rigidity of the entire liquid crystal display device while assuring a space in which the lamps of the direct backlight system are accommodated.

### Summary of the Invention

To solve the above-mentioned problems the present invention provides a direct backlight-type liquid crystal display device, including a liquid crystal panel, lamps which are disposed in the rear of the liquid crystal panel, a reflection plate, which is disposed in the rear of the lamps, and a frame) for supporting the reflection plate, wherein the frame is an integral structure comprising outer frame pieces having projecting pieces which project toward the liquid crystal panel, and wherein the projecting pieces form a space for accommodating the lamps therein, characterized in that that said frame is a die-cast frame made of a light weight metal including aluminum or magnesium and comprises at least one or more linkage pieces between the longer sides of the outer frame pieces which separate apertures in said die-cast frame.

In the liquid crystal display device of the present invention, the linkage pieces are provided with mount fixing portions for mounting the reflection plate.

In the liquid crystal display device of the present invention, the outer frame pieces are provided with mount fixing portions for mounting the frame of the liquid crystal panel.

In the liquid crystal display device of the present invention, the outer frame pieces are provided with through-holes through which lamp leads for connecting the lamps to a lamp lighting circuit board for driving the lamp are passed.

In the liquid crystal display device of the present invention, the linkage pieces are provided on the rear side thereof with mount fixing portions for mounting an electronic circuit board and/or power supply board.

In the liquid crystal display device of the present invention, the linkage pieces are provided on the rear side thereof with holding portions for holding leads which connect between electronic circuit boards and/or power supply board.

In the liquid crystal display device of the present invention, the linkage pieces are provided on the rear side thereof with mount portions for mounting the liquid crystal display device on wall mount fittings.

In the liquid crystal display device of the present invention, the linkage pieces are provided on the rear side thereof with mount portions for mounting the liquid crystal display device on a desk-top stand.

In the liquid crystal display device of the present invention, the die-cast frame is made of a lightweight metal including aluminum or magnesium.

### Brief Description of the Drawings

Fig. 1 is a schematic sectional view showing a main part of an exemplary conventional liquid crystal display device;
Fig. 2 is a perspective view showing one example of a conventional chassis made of a steel plate;
Fig. 3 is a schematic sectional view showing a main part in one embodiment of a liquid crystal display device of the present invention;
Fig. 4 is a front view showing a die-cast frame in one embodiment of a liquid crystal display device of the present invention as viewed from the liquid crystal panel side;
Fig. 5 is a rear view showing a die-cast frame in one embodiment of a liquid crystal display device of the present invention as viewed from the opposite side of the liquid crystal panel side;
Fig. 6 is a perspective view showing a die-cast frame in one embodiment of a liquid crystal display device of the present invention as viewed from the liquid crystal panel side;
Fig. 7 is a sectional view showing an exemplary structure of linkage pieces of the die-cast frame in one embodiment of the liquid crystal display device of the present invention;
Fig. 8 is a view showing one example of wall mount fittings for wall mounting a liquid crystal display device of the present invention; and
Fig. 9 is a view showing one example of condition in which a liquid crystal display device of the present invention is mounted on a desk-top stand.

### Preferred Embodiments of the Invention

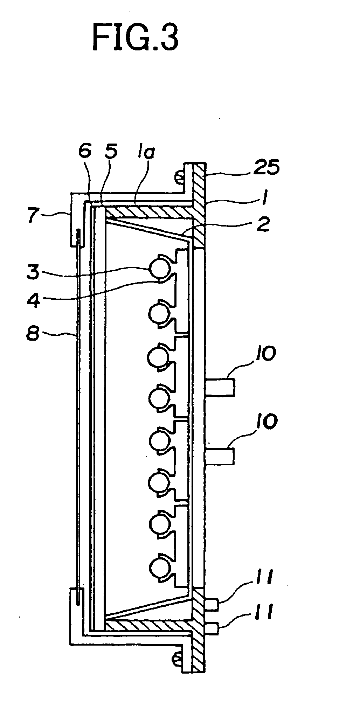

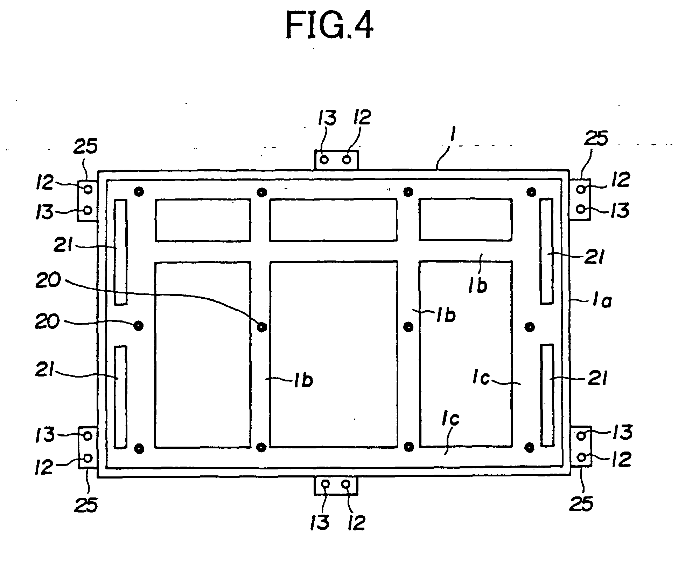

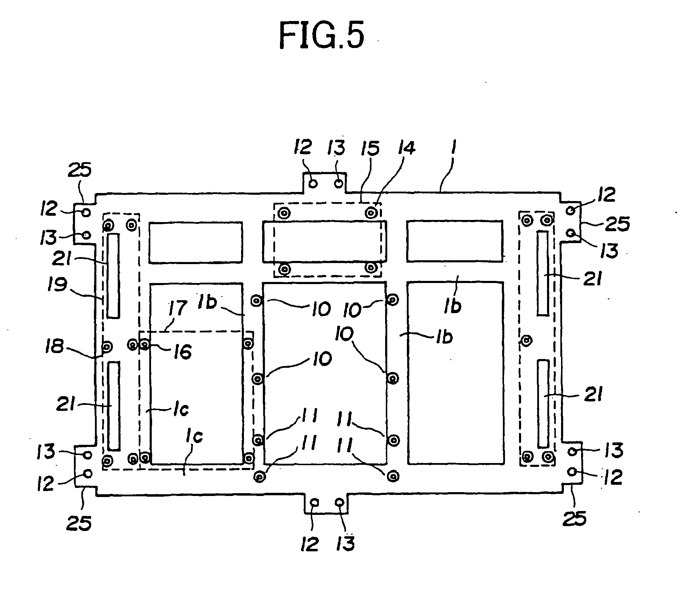

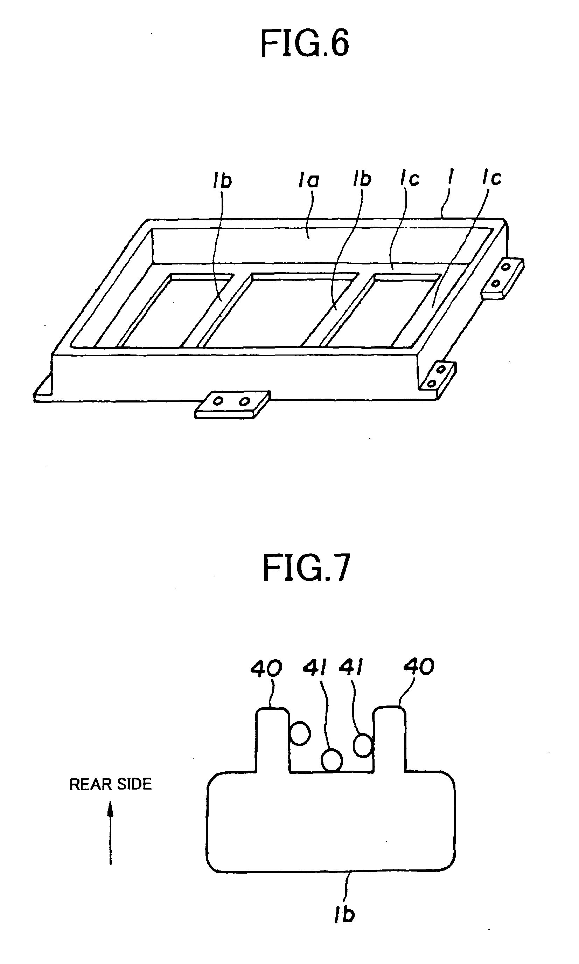

The liquid crystal display device of the embodiments of the present invention will be described with reference to Figs. 3 through 9. Fig. 3 is a schematic sectional view showing a main part in one embodiment of a liquid crystal display device of the present invention; Fig. 4 is a front view showing a die-cast frame in one embodiment of a liquid crystal display device of the present invention as viewed from the liquid crystal panel side; Fig. 5 is a rear view showing a die-cast frame in one embodiment of a liquid crystal display device of the present invention as viewed from the opposite side of the liquid crystal panel side; Fig. 6 is a perspective view showing a die-cast frame in one embodiment of a liquid crystal display device of the present invention as viewed from the liquid crystal panel side; Fig. 7 is a sectional view showing an exemplary structure of a linking piece of the die-cast frame in one embodiment of the liquid crystal display device of the present invention;

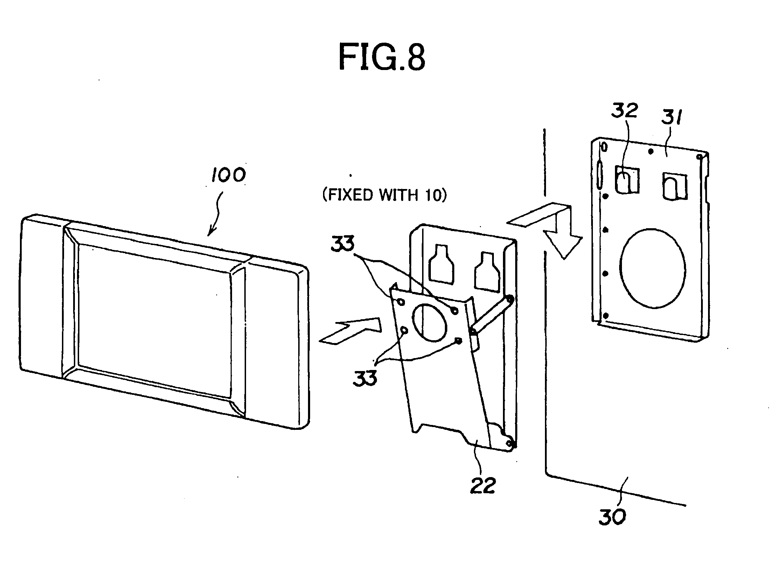

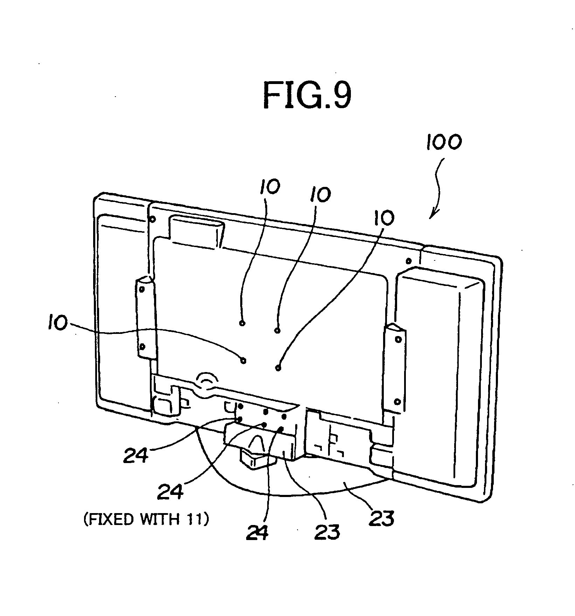

Fig. 8 is a view showing one example of wall mount fittings for wall mounting a liquid crystal display device of the present invention; and Fig. 9 is a view showing one example of condition in which a liquid crystal display device of the present invention is mounted on a desk-top stand.

In the drawings which illustrate the embodiments, a reference numeral 1 denotes a die-cast frame; 1a denotes projecting pieces of the die-cast frame; 1b denotes linkage pieces of the die-cast frame; 1c denotes an outer frame piece of the die-cast frame; 2 denotes a reflection plate; 3 denotes lamps (fluorescent lamps); 4 denotes lamp holders; 5 denotes a diffusion plate; 6 denotes a polarization reflection film; 7 denotes a panel frame; 8 denotes a liquid crystal panel; 10 denotes mounting screw portions of wall mount fittings; 11 denotes mounting screw portions of a desk-top stand; 12 denotes panel frame mounting portions; 13 denotes outside housing mounting portions; 14 denotes main board mounting screw portions ; 15 denotes a main board; 16 denotes power supply board mounting screw portions; 17 denotes a power supply board; 18 denotes an inverter board mounting screw portions; 19 denotes an inverter board (lamp lighting circuit); 20 denotes fixing screw portions for mounting the reflection plate; 21 denotes through holes through which lamp leads are passed; 22 denotes wall mount fittings; 23 denotes a desk-top stand; 24 denotes desk-top stand portions; 25 denotes extending portions; 30 denotes a wall; 31 denotes fitting retaining members; 32 denotes retaining pieces; 33 denotes mounting portions; 40 denotes linkage ribs; and 41 denotes leads.

As shown in Fig. 3, the liquid crystal display device of the present embodiment comprises the liquid crystal panel 8, the panel frame 7 to which the liquid crystal panel 8 is secured, and the die-cast frame 1 which form an outer structure. A cabinet case (not shown) is omitted from the illustrated outer structure. In other words, the die-cast frame 1 corresponds to a chassis.

The reflection plate 2 which reflects light rays from the lamps 3 toward the liquid crystal panel 8 is secured to the die-cast frame 1 in addition to the panel frame 7. The diffusion plate 5 which diffuses light rays from the lamps 3 and the polarization reflection film 6 which is in front of the diffusion plate 5 are disposed on the die-cast frame 1 in a fixed or semi-fixed manner. The lamp holders 4 are disposed on the reflection plate 2.

As shown in Fig. 6, the die-cast frame 1 comprises four side outer frame pieces 1c having vertical and lateral sizes corresponding to the screen size of the liquid crystal display device and linkage pieces 1b which link the outer frame pieces 1c in vertical and lateral directions, respectively. Thus, the overall die-cast frame 1 is not in the shape of flat plate, but hollow in structure. As shown in Figs. 4 and 5, two vertical linkage pieces 1b and one lateral linkage piece 1b are provided. Only one or more linkage piece 1b is required in a vertical direction.

As shown in Figs. 3 and 6, each of the outer frame pieces 1c is formed with projecting pieces 1a having a predetermined size, which project toward the liquid crystal panel 8. Each projecting piece 1a is capable of supporting the diffusion plate 5 and the polarization reflection film 6 at the top portion thereof. A space in which the lamps 3 are accommodated is formed by the projecting pieces 1a. Although the outer frame pieces 1c having the projecting piece 1a are provided on each of four sides of the die-cast frame 1, the projecting pieces 1a are required to be provided on at least three outer frame pieces 1c.

As described above, the die-cast frame 1 of the present embodiment is an integral structure comprising four side outer frame pieces 1c, the linkage pieces 1b and the projecting pieces 1a. The die-cast frame 1 is an integral structure which is manufactured by casting a molten light metal such as aluminum, magnesium into a die.

In other words, the die-cast frame 1 is an integral structure which is manufactured by casting a molten metal into a die and has projecting pieces 1a, thus it has a higher rigidity than that of a conventional chassis having not projecting pieces 1a, which is in the form of flat plate. Since the die-cast frame 1 is made of a lightweight metal and is hollow in structure, it also has a lightweight characteristic. By the way, aluminum which is used in the present invention has a specific weight of 2.7 and magnesium has a specific weight of 1.7 while iron which forms the conventional chassis of steel plate has a specific weight of 7.8.

In Figs. 3 and 6, the projecting pieces 1a of the die-cast frame 1 are provided for increasing the rigidity of the die-cast frame 1 which functions as the chassis as mentioned above. Increasing the rigidity of the die-cast frame 1 enhances the reinforcing function of the liquid crystal panel 8. The projecting pieces 1a of the die-cast frame 1 have the above-mentioned reinforcing function as well as a function for ensure a space in which the lamps 3 and lamp holders 4 are accommodated. The size of the projecting pieces 1a of the die-cast frame 1 in a height direction should be determined in view of enhancing the rigidity of the chassis structure and ensuring the space for lamps and their holders.

As is apparent from Fig. 3, the panel frame 7 to which the liquid crystal panel 8 is fixed is U-shaped in view of ensuring the rigidity of the liquid crystal panel when the liquid crystal panel 8 is fixed thereto. The outer frame pieces 1c of the die-cast frame 1 are integrally provided with the extending portions 25 which extend in parallel with the light receiving surface of the liquid crystal panel 8. The extending portions 25 are provided with panel frame mounting portions 12 for mounting the panel frame 7. The panel frame mount portions 12 are formed as holes which are opened through the extending portions 25.

Since the panel frame 7 and projecting pieces 1a are fitted to each other in a convex and concave manner, when the panel frame 7 is mounted on the above-mentioned panel frame mount portions 12, they are easily positioned. In other words, the panel frame 7 can be easily mounted on the die-cast frame 1 having projecting pieces 1a.

The extending portions 25 which are provided on the four side outer frame pieces 1c of the die-cast frame 1 are formed with housing mounting portions 13. Since a cabinet case (housing) (not shown) is mounted on the housing mounting portions 13, the cabinet case can be easily mounted. The housing mounting portions 13 are formed, for example, as holes through which mounting screws are passed.

The features of the present embodiment will be further described with reference to Figs. 4 and 5. In the present embodiment, reduction in the weight and increase in the rigidity of the die-cast frame 1 is achieved by a hollow (aperture) structure which is constituted by the outer frame pieces 1c and linkage pieces 1b of the die-cast frame 1. Main board mounting screw portions 14 for mounting the main board 15 of the liquid crystal display device and power supply board mounting screw portions 16 (Fig. 5) for mounting power supply board 17 are provided on the rear side of the linkage pieces 1b.

Inverter board mounting screw portions 18 (Fig. 5) for mounting the inverter board 19 for the lamp lighting circuit are provided on the outer frame pieces 1c of the die-cast frame 1. Through holes 21 through which lamp leads for electrically connecting the lamps 3 on the front side of the die-cast frame 1 to the inverter board 19 on the rear side thereof are formed through the outer frame pieces 1c.

The mounting screw portions 10 for the wall mount fittings (refer to Fig. 8 which will be described below) for mounting the liquid crystal display device are provided on the rear side of the linkage pieces 1b of the die-cast frame 1. The mounting screw portions 11 for mounting the liquid crystal display device on the desk-top stand (refer to Fig. 9 which will be described below) are provided on the rear side of the linkage pieces 1b and the outer frame pieces 1c. Each of the mounting screw portions 10 and 11 are a projecting piece which is integral with the linkage pieces 1b and the outer frame pieces 1c and is female or male threaded.

As shown in Fig. 4, fixing screw portions 20 for mounting the reflection plate 2 are provided on the front side (facing to the liquid crystal panel 8) of the linkage pieces 1b and the outer frame pieces 1c. If the reflection plate 2 is disposed on the plane of the die-cast frame 1 in an irregular or flexed manner, the space between the lamps 3 and the reflection plate 2 is not uniform, causing unevenness in brightness on the display screen, which leads to deterioration of the performance. Accordingly, the reflection plate 2 should be disposed on the die-cast frame 1 without causing irregularity or flexing thereof. Therefore, the irregularity and flexing of the reflection plate 2 is prevented by providing one or more linkage pieces 1b between the outer frame pieces 1c and securing the reflection plate 2 on the fixing screw portions 20 formed on the linkage pieces 1b.

Although two vertical linkage pieces 1b are provided in the present embodiment, the present invention is not limited to this, so that the number of the linkage pieces 1b may be 1 or more than 2. The number of the linkage pieces 1b is determined depending upon the size of the display screen. If one linkage piece 1b is provided in a vertical direction, the main board 15 may be mounted on the die-cast frame 1 by using mount portions provided on the linkage pieces 1b and four side outer frame pieces 1c. As shown in Figs. 4 and 5, linkage pieces 1b may be provided in a lateral direction.

Now, the structure and function of the linkage pieces 1b will be described. The linkage pieces 1b may not be flat on its rear side, but may be ribbed or U-shaped to hold the leads connected between various boards or between the board and components. In the structure of ribbed linkage piece in Fig. 7, the linkage 1b is formed with ribs 40 between which leads 41 can be held. In other words, the structure of Fig. 7 enables the leads 41 to be accommodated between two ribs 40. Failure due to the displacement of the leads 41 away from the space between the ribs can be prevented from occurring. The structure shown in Fig. 7 further enhances the rigidity of the die-cast frame 1.

The liquid crystal display device of the present invention is premised on that it is of direct backlight-type, and essentially comprises the reflection plate 2 as an indispensable element. The reflection plate 2 which is used in the embodiment of the present invention is made of aluminum, magnesium or PET (polyethylene terephthalate) and contributes to reduction in overall weight of the liquid crystal display device. In the embodiment of the present invention, an integral structure is provided by mounting the reflection plate 2 on the die-cast frame 1 by means of screws, so that the reflection plate 2 made of the above-mentioned material can function as a reinforcing member for the die-cast frame 1.

Comparison between the performances of the hollow or aperture die-cast frame 1 of the present invention and the conventional iron plate chassis (prior art 1) and entire area die-cast chassis (prior art 2) will be described. Cases in which the screen size of the liquid crystal display device is larger than 30 inches and the used reflection plate is reflective film (a film suffices since the chassis is plate over the entire area) in the prior arts 1 and 2 and aluminum reflection plate (thickness of 0.5 mm) in the present invention will be considered. Concerning the thickness of the chassis or frame, iron plate has a thickness of 1.2 mm and entire area die-cast chassis (prior art) and die-cast frame (present embodiment) have 3.0 mm. In the above-described condition, the weight of the iron plate chassis structure (iron plate chassis and reflection film) is about 3.0 kg and the weight of the entire area die-cast chassis structure (die-cast chassis and reflection film) is about 2.7 kg and about 1.7 kg if the die-cast chassis is made of aluminum and magnesium, respectively. On the other hand, the weight of the aperture die-cast chassis structure of the present invention (die-cast frame and aluminum reflection plate) is about 1.9 kg and about 1.5 kg if the die-cast frame is made of aluminum and magnesium, respectively. It is found from the comparison that the present embodiment is more excellent in light weight.

In view of the rigidity in the chassis structure, the prior art 1 has a lower rigidity since the U-shaped projecting portions are bent whereas the present invention has a higher rigidity since the projecting portions (projecting pieces 1a) are die-cast structures similarly to the prior art 2.

Now, the capacity of the casting machine for casting the die-cast chassis or die-cast frame will be considered. The capacity which is required for the casting machine for conducting die-casting is usually represented by tonnage (the force which is necessary to force the molten metal into a die is represented by tonnage). The tonnage which is necessary for the casting machine is determined by the projected area of a product to be cast. The capacity of the casting machine for casting the chassis of prior art 2 is 1600 tons, so that the casting machine of 800 tons suffices for the chassis (die-cast frame) of the present invention. Since the die-cast frame of the present invention is hollow in structure, projected area is smaller than that of the prior art 2, a less capacity of the casting machine is required. The present invention eliminates the necessity of using the casting machine having a larger capacity and makes the casting speed relatively faster and reduces the casting cost in comparison with that of the prior art 2.

The panel frame 7 to which the liquid crystal panel 8 is fixed can be of course mounted on the die-cast frame 1 of the present invention (Fig. 3). The die-cast frame 1 is structured so that wall mount fittings and desk-top stand can be mounted thereon by means of mounting screw portions 10, 11.

If the liquid crystal display device of the present invention is mounted on the wall, as shown in Fig. 8, the retaining member 31 having the retaining pieces 32 is secured on the wall 30 and wall mount fittings 22 is engaged with the retaining pieces 32. The wall mount fittings 22 are provided with mount portions 33 (for example, holes through which screws are passed). The mount screw portions 10 (Fig. 3) provided on the linkage pieces 1b of the liquid crystal display device 100 is screwed to the wall mount fitting 22.

If the liquid crystal display device of the present invention is disposed on the desk-top stand, as shown in Fig. 9, the desk-top stand 23 is formed with mount portions 24 (for example, holes through which screws are passed) and then mount screw portions 11 (Fig. 3) which are provided on the linkage pieces 1b and the outer frame pieces 1c of the liquid crystal display device 100 are mounted on the desk-top stand 23 by using the mount portions 24.

Since various specific structures for mounting the inventive liquid crystal display device on the wall or the desk-top stand are conceivable, the present invention is not limited to only the above-mentioned structures. For example, the mount screw portions 10, 11 may be male-threaded projecting pieces.

Since the liquid crystal display device of the present invention is structured as mentioned above, the projecting pieces 1a which are provided on the outer frame pieces 1c of the die-cast frame 1 enable a space in which the lamps 3 are accommodated to be formed, the rigidity of the die-cast frame 1 to be increased and the reflection plate 2 and the liquid crystal panel 8 to be firmly supported.

Since the die-cast frame 1 is made hollow by the four side outer frame pieces 1c and the linkage pieces 1b, both reduction in weight and the increase in rigidity of the die-cast frame 1 can be achieved. The fact that the die-cast frame 1 is made of a lightweight metal such as aluminum or magnesium reduces the weight of the frame and enhances the productivity (manufacturing cost, casting speed, elimination of the necessity of the high capacity casting machine).

Provision of the die-cast frame 1 with the linkage pieces 1b enables the reflection plate 2 to be mounted in a plurality of appropriate positions without causing the reflection plate 2 to be flexed and mount structures for wall mount and desk-top stand can be provided. The panel frame 7 on which the liquid crystal panel 8 can be positioned by the projecting pieces 1a of the die-cast frame 1. Under this condition, the panel frame 7 can be positively and easily secured to the panel frame mount portions 12 of the die-cast frame 1.

## Claims

1. A direct backlight-type liquid crystal display device, including a liquid crystal panel (8), lamps (3) which are disposed in the rear of the liquid crystal panel (8), a reflection plate (2) which is disposed in the rear of the lamps (3), and a frame (1) for supporting the reflection plate (2), wherein
the frame (1) is an integral structure comprising outer frame pieces (1c) having projecting pieces (1a) which project toward the liquid crystal panel,
and wherein
the projecting pieces (1a) form a space for accommodating the lamps (3) therein,
**characterized in that that** said frame (1) is a die-cast frame (1) made of a light weight metal including aluminum or magnesium and comprises at least one or more linkage pieces (1b) between the longer sides of the outer frame pieces (1c) which separate apertures in said die-cast frame (1).

2. The liquid crystal display device as defined in claim 1, wherein the outer frame pieces (1b) are provided with mount fixing portions (20) for mounting the reflection plate (2).

3. The liquid crystal display device as defined in claims 1 or 2, wherein the outer frame pieces (1c) are provided with mount fixing portions (25) for mounting a frame (7) of the liquid crystal panel.

4. The liquid crystal display device as defined in claims 1 to 3, wherein the outer frame pieces (1c) are provided with through holes (21) for passing lamp leads for connecting the lamps (3) to a lamp lighting circuit board (19) for driving the lamps (3).

5. The liquid crystal display device as defined in any of claims 1 to 4, wherein the linkage pieces (1b) are provided on the rear side thereof with mount fixing portions (16, 18) for mounting an electronic circuit board and/or a power supply board.

6. The liquid crystal display device as defined in any of claims 1 to 5, wherein the linkage pieces (1b) are provided on the rear side thereof with holding portions for holding leads (41) which connect between electronic circuit boards and/or power supply board.

7. The liquid crystal display device as defined in any of claims 1 to 6, wherein the linkage pieces (1b) are provided on the rear side thereof with mount portions (10) mounting the liquid crystal display device on wall mount fittings.

8. The liquid crystal display device as defined in any of claims 1 to 7, wherein the linkage pieces (1b) are provided on the rear side thereof with mount portions (11) for mounting the liquid crystal display device on a desk-top stand.

## Patentansprüche

1. Flüssigkristall-Sichtanzeigeanordnung des Typs mit direkter Hintergrundbeleuchtung, die ein Flüssigkristallfeld (8), Lampen (3), die an der Rückseite des Flüssigkristallfeldes (8) angeordnet sind, eine Reflektorplatte (2), die an der Rückseite der Lampen (3) angeordnet ist und einen Rahmen (1) zum Halten der Reflektorplatte (2) enthält, wobei
der Rahmen (1) eine einstückige Struktur ist, die äußere Rahmenstücke (1c) mit vorspringenden Stücken (1a) aufweist, die zum Flüssigkristallfeld vorspringen,
und wobei
die vorspringenden Stücke (1a) einen Raum zur Aufnahme der Lampen (3) bilden,
**dadurch gekennzeichnet, dass** der Rahmen (1) ein Druckgussrahmen (1) ist, der aus einem leichtgewichtigen Metall einschließlich Aluminium oder Magnesium hergestellt ist und der zwischen den längeren Seiten der äußeren Rahmenstücke (1c) wenigstens ein oder mehrere Verbindungsstücke (1b) aufweist, die Öffnungen in dem Druckgussrahmen (1) abteilen.

2. Flüssigkristall-Sichtanzeigeanordnung nach Anspruch 1, bei der die äußeren Rahmenstücke (1b) mit Montagebefestigungsteilen (20) zur Montage der Reflektorplatte (2) versehen sind.

3. Flüssigkristall-Sichtanzeigeanordnung nach Anspruch 1 oder 2, bei der die äußeren Rahmenstücke (1c) mit Montagebefestigungsteilen (25) zur Montage eines Rahmens (7) des Flüssigkristallfeldes versehen sind.

4. Flüssigkristall-Sichtanzeigeanordnung nach einem der Ansprüche 1 bis 3. bei der die äußeren Rahmenstücke (1c) mit Durchgangsbohrungen (21) zum Durchführen von Lampenleitungen versehen sind, um die Lampen (3) an eine Lampenbeleuchtungsschaltungsplatte (19) zum Ansteuern der Lampen (3) anzuschließen.

5. Flüssigkristall-Sichtanzeigeanordnung nach einem der Ansprüche 1 bis 4, bei der die Verbindungsstücke (1b) an ihrer Rückseite mit Montagebefestigungsteilen (16,18) für die Montage einer elektronischen Schaltungsplatte und/oder Stromversorgungsplatte versehen sind.

6. Flüssigkristall-Sichtanzeigeanordnung nach einem der Ansprüche 1 bis 5, bei der die Verbindungsstücke (1b) an ihrer Rückseite mit Halteteilen zum Halten von Leitungen (41) versehen sind, die zwischen elektronischen Schaltungsplatten und/oder einer Stromversorgungsplatte verbinden.

7. Flüssigkristall-Sichtanzeigeanordnung nach einem der Ansprüche 1 bis 6, bei der die Verbindungsstücke (1b) an ihrer Rückseite mit Montageteilen (10) für die Montage der Flüssigkristall-Sichtanzeigeanordnung an Wandmontagearmaturen versehen sind.

8. Flüssigkristall-Sichtanzeigeanordnung nach einem der Ansprüche 1 bis 7, bei der die Verbindungsstücke (1b) an ihrer Rückseite mit Montageteilen (11) für die Montage der Flüssigkristall-Sichtanzeigeanordnung an einem Tischständer versehen sind.

## Revendications

1. Dispositif d'affichage à cristaux liquides de type à rétro-éclairage direct comprenant un panneau de cristaux liquides (8), des lampes (3) disposées à l'arrière du panneau de cristaux liquides (8), une plaque de réflexion (2) disposée à l'arrière des lampes (3), et un bâti (1) destiné à supporter la plaque de réflexion (2), dans lequel
le bâti (1) est une structure monobloc comprenant des éléments de bâti extérieurs (1c) munis de parties saillantes (la) qui s'avancent en direction du panneau de cristaux liquides,
et dans lequel
les parties saillantes (1a) définissent un espace destiné à loger les lampes (3),
**caractérisé en ce que** ledit bâti (1) est un bâti moulé sous pression (1) formé d'un métal léger comprenant l'aluminium ou le magnésium et comporte au moins un élément de liaison (1b) entre les plus grands côtés des éléments de bâti extérieurs (1c) qui séparent des ouvertures ménagées dans ledit bâti moulé sous pression (1).

2. Dispositif d'affichage à cristaux liquides tel que défini dans la revendication 1, dans lequel les éléments de bâti extérieurs (1c) sont munis de parties de fixation de montage (20) pour permettre le montage de la plaque de réflexion (2).

3. Dispositif d'affichage à cristaux liquides tel que défini dans la revendication 1 ou 2, dans lequel les éléments de bâti extérieurs (1b) sont munis de parties de fixation de montage (25) pour permettre le montage d'un cadre (7) du panneau de cristaux liquides.

4. Dispositif d'affichage à cristaux liquides tel que défini dans l'une quelconque des revendications 1 à 3, dans lequel les éléments de bâti extérieurs (1c) sont munis de trous traversants (21) permettant le passage de conducteurs de lampes servant à relier les lampes (3) à une carte à circuit d'éclairage de lampes (19) destinée à commander les lampes (3).

5. Dispositif d'affichage à cristaux liquides tel que défini dans l'une quelconque des revendications 1 à 4, dans lequel les éléments de liaison (1b) sont munis, sur leur côté arrière, de parties de fixation de montage (16, 18) pour permettre le montage d'une carte à circuit électronique et/ou d'une carte d'alimentation.

6. Dispositif d'affichage à cristaux liquides tel que défini dans l'une quelconque des revendications 1 à 5, dans lequel les éléments de liaison (1b) sont munis, sur leur côté arrière, de parties de retenue destinées à retenir des conducteurs (41) d'interconnexion de cartes à circuit électronique et/ou de carte d'alimentation.

7. Dispositif d'affichage à cristaux liquides tel que défini dans l'une quelconque des revendications 1 à 6, dans lequel les éléments de liaison (1b) sont munis, sur leur côté arrière, de parties de montage (10) pour permettre le montage du dispositif d'affichage à cristaux liquides sur des dispositifs de montage mural.

8. Dispositif d'affichage à cristaux liquides tel que défini dans l'une quelconque des revendications 1 à 7, dans lequel les éléments de liaison (1b) sont munis, sur leur côté arrière, de parties de montage (10) pour permettre le montage du dispositif d'affichage à cristaux liquides sur un support pour bureau.
